(19) Europäisches Patentamt
European Patent Office
Office européen des brevets

(11) Veröffentlichungsnummer: 0 302 522 A2

(12) EUROPÄISCHE PATENTANMELDUNG

(21) Anmeldenummer: 88112811.0

(22) Anmeldetag: 05.08.88

(51) Int. Cl.[4]: C02F 5/02 , C02F 9/00 , C02F 1/52 , B01D 53/34

(30) Priorität: 07.08.87 DE 3726408

(43) Veröffentlichungstag der Anmeldung: 08.02.89 Patentblatt 89/06

(84) Benannte Vertragsstaaten: AT BE CH DE ES FR GB GR IT LI LU NL SE

(71) Anmelder: NALCO CHEMICAL COMPANY
One Nalco Center
Naperville Illinois 60566-1024(US)

(72) Erfinder: Geis, Fred
Karlstrasse 19
D-4750 Unna/Westfalen(DE)

(74) Vertreter: Rotter, Ulrich, Dipl.-Chem. Dr. et al
Pienzenauerstrasse 2
D-8000 München 80(DE)

# (54) Verfahren und Additiv zur Steuerung prozessbedingter Wasserhärte von Kreislaufwasser in Konversionsanlagen.

(57) Es wird ein Verfahren zur Kontrolle und Steuerung der prozeßbedingten Wasserhärte von Kreislaufwasser in Konversionsanlagen beschrieben, insbesondere in Anlagen zur Eisen-, Stahl- und NE-Metallgewinnung, -raffination und/oder -verarbeitung, bei welchen schadstoffbelastete Abgase gebildet werden, die gemäß den Richtlinien zur Reinhaltung von Luft ohne entsprechende Abreinigung nicht an die Atmosphäre abgegeben werden können. Dabei ist mindestens eine Naßwäsche nachgeschaltet. Dem Waschwasser und/oder dem im Kreislaufwasser geführten Klärwasser wird neben den üblichen Zusatzen wie Kohlensäure, Flockungsmittel, schwellenwirksamen Stoffen mit Kristallwachstumdesaktivator-Eigenschaften (GS) und Erdalkaliverbindungen wie Kalkwasser zusätzlich mindestens eine Aluminatverbindung zugesetzt, um die Abreinigungswirkung zu verstärken (Fig. 1). Ferner wird ein Additiv zur Beschleunigung der Abreinigung von Abgasen beschrieben, das ein wäßriges Fluid ist mit Flockungsmitteln, grenzflächenaktiven Mitteln, Erdalkaliverbindungen und mindestens einer gelösten und/oder dispergierten bzw. suspendierten Aluminatkomonente in einer Konzentration von etwa 0,01 bis 10 g Aluminium/l Fluid und vorzugsweise von etwa 0,1 bis 5 g Al/l Fluid.

EP 0 302 522 A2

# Verfahren und Additiv zur Steuerung prozeßbedingter Waserhärte von Kreislaufwasser in Konversionanlagen

Die Erfindung betrifft die Kontrolle und Steuerung, insbesondere jedoch die Herabsetzung des Gehaltes an Verbindungen, die als solche für die Härte eines Wassers verantwortlich sind, in dem Kreislaufwasser von Konversionsanlagen. Diese Wasserhärte ist dabei im wesentlichen durch den Konversionsgesamtprozeß selbst und speziell durch die hierfür angewendete Naßwäsche bedingt. Als Härtebildner kommen die üblichen Wasserhärtekomponenten wie die Salze des Calciums und Magnesiums, insbesondere die Chloride, Sulfate, Sulfite, Hydroxide, Hydrogencarbonate bzw. Carbonate in Betracht. "Wasserhärte" erfaßt deshalb sowohl die Carbonathärte (KH) als auch die Nichtcarbonathärte (NKH).

Es ist bekannt, daß bei großtechnischen Anlagen der Stahlerzeugung, NE-Metallgewinnung und -verarbeitung, z.B. bei Röstprozessen und dergl., aber auch bei Verbrennungsprozessen zur Energiegewinnung in Großfeuerungsanlagen oder Mullverbrennungsanlagen, Abgase gebildet werden, die noch eine erhebliche Konzentration an Schadstoffen, wie HCl, HF, Dämpfe von Metallverbindungen und flüchtige Verbindungen sowie mitgerissene staubförmige Prozeßzusätze und Oxidationsprodukte aufweisen und mit dieser Belastung so nicht an die Atmosphäre abgegeben werden können. Um die Konzentration dieser Schadstoffe auf einem möglichst niedrigen Niveau zu halten, ist im Anschluß an den eigentlichen Konversionsprozeß eine Gaswäsche, z.B. eine Naßwäsche vorgesehen, mit der meistens durch Zuführen von Kalkwasser die sauren Bestandteile wie Chlorwasserstoffsäure und Fluorwasserstoffsäure, aber auch andere sauer oder alkalisch reagierende und durch Erdalkali zu bindende Komponenten aus dem Abgas abgetrennt werden. Das wäßrige System zur Naßwäsche ist meistens ein im Kreislauf geführtes Wassersystem, das im erschöpften Zustand aufgrund der enthaltenen Erdalkaliverbindungen wie $Ca(OH)_2$, $Mg(OH)_2$, Hydrogencarbonate oder gemischte Calcium- und Magnesium-hydroxide/carbonate, z.B. Dolomite, bezüglich dieser Verbindungen gesättigt bzw. übersättigt ist.

Es wäre deshalb erstrebenswert, das Wasch- und/oder Kreislaufwasser so weit wie möglich von diesen Erdalkalicarbonaten, Erdalkalihydroxiden, Erdalkalisulfaten und dergl. zu befreien, um eine noch bessere Effizienz der Schadstoffabreinigung durch Naßwäsche zu erreichen, den Wasserverbrauch zu senken und die Gesamtanlage ökonomischer zu betreiben.

Der Erfindung liegt die Aufgabe zu Grunde, die prozeßbedingte, d.h. durch Prozeßvariable und Prozeßmittel eingeführte Wasserhärte von Kreislaufwässern in Konversionsanlagen, wie Anlagen der Eisengewinnung und -verarbeitung, der Stahlherstellung und - verarbeitung, der NE-Metallgewinnung, -raffination und - verarbeitung, aber auch in Anlagen zur Energiegewinnung, wie Kohle-, Öl-, Gas- und sonstige Kraftwerke, einschließlich der Konversionsanlagen bei der Müllverbrennung, Müllverschwelung und dergl., so ku kontrollieren und zu steuern, daß ein möglichst langanhaltender störungsfreier Wasserkreislauf gewährleistet ist und gleichzeitig die während der Naßwäsche zugesetzten und in direkten Reaktionskontakt mit den Rauch- und Abgasen - gelangenden Prozeßchemikalien möglichst weitgehend und in wirtschaftlicher Weise wieder aus dem Kreislaufwasser herausgenommen werden können. Ein solches Verfahren hat insoweit eine wesentlich verbesserte Wasserökonomie zur Folge, was unmittelbar in Wasserersparnis, aber auch zur Senkung sonstiger Betriebskosten zum Ausdruck kommt. Außerdem soll das Verfahren nicht nur umweltverträglich ausgestattet sein, sondern darüber hinaus - ohne gesetzliche Zwänge - durch Minimierung der Schadstoffe, die aufgrund der gegenwärtigen Richtlinien zur Luftreinhaltung (TA Luft II) durchaus noch an die Atmosphäre abgegeben werden könnten, eine deutliche Unterschreitung derartiger Limite erreichen.

Zur Lösung dieser Aufgabe schlägt die Erfindung das in Anspruch 1 angegebene Verfahren mit bevorzugten Ausgestaltungen nach den Ansprüchen 2 bis 28 und für den Einsatz in einer bevorzugten Verfahrensgestaltung ein hierzu einsetzbares Additiv gemäß Anspruch 29 mit bevorzugten Ausführungsformen nach den Ansprüchen 30 und 31 vor.

Es wurde nach ausgedehnten Untersuchungen überraschenderweise gefunden, daß durch den Zusatz mindestens einer Aluminatverbindung, insbesondere einer Alkalialuminiumverbindung wie Natriumaluminat eine hervorragende Steuerung der Calciumcarbonat- und/oder Calciumsulfatfällung im Sinne einer die Keimbildungs- und Keimwachstumsvorgänge stark promovierenden Weise erreicht werden kann.

Als Alkalialuminatverbindung (dieser Begriff wird hier im weitesten Sinne benützt) kommen sowohl in Wasser gelöste bzw. lösliche Verbindungen als auch in Wasser dispergierte oder suspendierte bzw. dispergierbare und suspendierbare Verbindungen in Betracht. Ohne sich hier durch eine theoretische Erklärung binden zu wollen, wird vermutet, daß die Alkalität der Alkalialuminatverbindung unter den Bedingungen der Abgas- bzw. Rauchgaswäsche eine langsame Hydrolyse des Aluminats bewirkt und hierdurch OH-Ionen freigesetzt werden, die eine pH-Verschiebung zu einem Arbeitsbereich bewirken, der

günstigere Bedingungen für die Erdalkalicarbonat- und/bzw. Erdalkalisulfat-Fällung schafft. Zusätzlich zu diesen chemisch bestimmten Rahmenbedingungen scheint jedoch auch die Kinetik der Nucleusbildung von Erdalkalicarbonat bzw. Erdalkalisulfat unter den Prozeßbedingungen der Naßwäsche, ggf. sogar unter zusätzlicher günstiger Mitwirkung der anderen, ublicherweise eingesetzten Komponenten wie grenzflächenaktiven Stoffe, Flockungsmittel und der Zuleitung einer sauren Komponente wie $CO_2$ (die sowohl aus dem Konversionsprozeß als auch extern zugeführt werden kann) ideale Bedingungen vorzufinden. Die hier in Frage kommenden Erdalkalien sind insbesondere Calcium und Magnesium, obwohl das Pseudo-Erdalkalimetall Beryllium und die Verbindungen des Strontiums und Bariums nicht ausgenommen sein sollen.

Beispiele für geeignete Alkalialuminatverbindungen sind vor allem die Vertreter der Natriumaluminat-Reihe, obwohl die entsprechenden Kaliumverbindungen nicht ausgeklammert sind. Natiumaluminat ist als amphoterer Stoff zu betrachten, dem in der einfachsten Form der Formel $Na(Al(OH)_4)$ entspricht. Natriumaluminat entsteht durch Lösen von $Al(OH)_3$ in überschüssiger Natronlauge. Da das Aluminatanion $(Al(OH)_4)^-$ unter Wasseraustritt zu höheren Ketten bzw. Netzen kondensieren kann, werden uU Dl- und Polyaluminatanionen, entsprechend etwa der Formel

$$(H_{2n+2}Al_nO_{3n-1})^{4-}$$

gebildet, die als ketten-, blatt- oder raumnetzstrukturartige Polyverbindungen auch in der Natur vorkommen, z.B. als Spinelle $(Mg,Fe,Zn)Al_2O_4$. Auf jeden Fall sind die erfindungsgemäß verwendbaren und alkalisch reagierenden Aluminate zur Bindung von Kationen befähigt. Aluminiumhydroxid-Minerale, die den vorgenannten Aluminaten verwandt sind, stehen mit den verschiedensten Tonsorten, Bauxiten, Kaolinen und andere Mineralen, in denen neben Al meistens auch Si (als Silikat) und vielfach Eisenoxid, vereinzelt auch Vanadiumoxid und Titandioxid gebunden sind, zur Verfügung. Je nach Kondensations- und Vernetzungsgrad sind die Aluminate in Wasser löslich oder wasserunlöslich, aber in Wasser dispergierbar bzw. suspendierbar, da sie ausgesprochen hydrophilen Charakter aufweisen.

Erfindungsgemäß können die vorgenannten Aluminat-Variationen eingesetzt werden, wobei je nach der speziellen Anlage und Zielsetzung Lösungen, ggf. kolloidale Lösungen, Suspensionen oder Dispersionen anwendbar sind. Der Zusatz von Feststoff-Aluminaten ist nicht ausgeschlossen, wenngleich weniger bevorzugt. Die Aluminatlösungen können durch Auflösen von Aluminiumhydroxid in Natronlauge oder auch immanent aus solchen Verfahren stammen, die das Al in Form des Aluminats herstellen bzw. verarbeiten. Beispielsweise ist der Einsatz von Natriumaluminat, das nach dem Bayer-Verfahren anfällt und von dem vorzugsweise der Rotschlamm bereits abgetrennt wurde, im erfindungsgemäßen Verfahren sehr gut geeignet.

Es hat sich gezeigt, daß die gemeinsame Verwendung von Natriumaluminat als typischem Aluminat und basischen Silikaten wie Wasserglas zusätzliche Vorteile bezüglich der Keimbildungskinetik und der Effizienz der Bindung von Schadstoffkomponenten, insbesondere von Schwermetallen bietet. Wasserglas ist als Verbindungsgruppe zu betrachten, bei der ca. 2-4 Mole $SiO_2$ auf 1 Mol Alkalioxid ($Na_2O$ oder Kaliumoxid) kommen und meistens in Gegenwart von $CO_2$ hoch-adsorptive und absorptive Sole, Gele, oder andere kolloidale Aggregationen gebildet werden. Die Kombinationen aus alkalischen Aluminat/silikat-Lösungen sind komplexe Systeme mit außerordentlich hoher Bindekapazität für die während der Naßwäsche präsenten Stoffkomponenten. Neben den rein chemischen Bindevorgängen finden bei diesen alkalischen Alumosilikaten typischerweise zusätzlich physikalische bzw. physikalisch-chemische Vorgänge statt, die den AluminatEffekt günstig unterstützen und vielfach sogar deutlich verstärken. So ist wahrscheinlich auch die Eignung der Zeolithe, d.h. der hydratisierten Alkalialumosilikate zu erklären, die mit der allgemeinen Formel

$$(MeO) . Al_2O_3 . (SiO_2)_b . (H_2O)_c$$

wiedergegeben werden können, wobei Me beispielhaft für ein zweiwertiges Metall steht, etwa für Ca oder Mg im Bodenstand der Naßwäsche nach Ausführung des erfindungsgemäßen Verfahrens. Diese Zeolith-Aluminate verfügen über lonenaustausch- und Gelpermeationseigenschaften und tragen hierdurch zusätzlich zur Nucleusbildung der Erdalkaliverbindung bei der Naßwäsche, aber gleichzeitig auch zur Bindung anderer im Abgas enthaltener Komponenten bei, z.B. von Schwermetallionen.

Neben den Alkalisilikaten wie Natrium- und Kaliumsilikat können auch Kieselsäuren als pyrogene, hydratisierte, kolloidale Kieselsäuren, gegebenenfalls in Form von Kieselsäuresolen oder-gelen, eingesetzt werden. Diese zusätzliche Komponente auf Basis von Kieselsäure hat die allgemeine Formel $(SiO_2)_y . xH_2O$, worin x und y unabhängig voneinander Werte von jeweils 1 bis 20 aufweisen.

Das erfindungsgemäße Verfahren wird anhand der Fig. 1 näher erläutert.

Die Zeichnung (Fig. 1) zeigt in schematisierter Form eine Anlage zur Konversion eines umzusetzenden

Materials (Konversionsausgangsgut), z.B. eines Feststoffs wie Kohle, Erz, Müll, eines flüssigen Stoffes wie z.B. Roheisen, Klärschlamm, Öl, oder auch eines gasförmigen Stoffes wie Erdgas. Die Anlage von Fig. 1 besteht aus einer Konvertereinheit A, einer Naßwäsche B, der Nachbehandlung des Restrauchgases C und der Waschwasserkonditionierung D. Der Rauchgasverlauf ist in Fig. 1 ebenso schematisiert wie der Kreislauf des Waschwassers dargestellt, so daß insbesondere die Eintritts- und Austrittstellen des Gases und Wassers in die Reaktoren sowie die Zudosierstellen für die verschiedenen Prozeßhilfsmittel wie Additiv (ADD), schwellenwirksamer Stoff (GS) mit Kristallwachstumdesaktivator-Eigenschaften und meistens auch grenzflächenaktiven Eigenschaften, Flockungsmittel und Flockungshilfmittel (FM), Erdalkalihydroxid wie $Ca(OH)_2$ in Anpassung an die spezifische Verfahrenssituation und Prozeßauslegung anpaßbar angeordnet werden können. Erdalkaliquelle kann auch der Konversionsprozeß sein, z.B. bei Kalk- und Dolomiteinsatz im Blasstahlverfahren und Calciumcarbideinsatz bei der Entschwefelung. Dennoch sind gewisse Gesichtspunkte einer besonders günstigen Verfahrensgestaltung, beispielsweise bei der gemeinsamen Vormischung von ADD und GS bzw. FM und $Ca(OH)_2$ vor Eintritt in den AblaufEindicker 7 und/oder vor Zutritt zu dem Rauchgas vor Eintritt in einen der Wäscher I (2) und II (3) in Fig. 1 berücksichtigt. Im übrigen konnen die bei solchen Anlagen bekanntermaßen benutzten Einrichtungen und Teilkomponenten angewendet werden. Nicht dargestellt sind die Meß- und Regelkreisläufe, um die Übersicht nicht zu stören. Wenngleich beispeilsweise jeweils 3 Vorratseinrichtungen für Additiv ADD (15, 17 und 19) oder schwellenwirksamen Stoff GS (14, 16 und 20) gezeigt sind, versteht es sich von selbst, daß diese Vorräte zentral gelagert und zentral koordiniert abgerufen werden können, um an den vorgesehenen Dosierstellen entsprechende Additionen anteilweise oder kontinuierlich und zum geeigneten Zeitpunkt vorzunehmen. Eine Zusammenfassung der Symbole erleichtert im folgenden deren Identifizierung und Zuordnung im Rahmen der technischen Durchführung der Erfindung. 1 Konvertereinheit, mit bevorzugt bis zu 3 Einzelkonvertern

2 Waschsättiger bzw. Wäscher I

3 Wäscher II, Nachwäscher

4 Filter, bevorzugt Elektrofilter vorwiegend zur Staubabscheidung

5 Gasometer

6 Kamin zur Abgabe des gereinigten Rauchgases mit Restlasten, die deutlich unterhalb der zur Reinhaltung der Luft erforderlichen Limite liegen

7 Ablauf-Eindicker zur Eindickung und Trennung des erschöpften bzw. belasteten Waschwassers

8 Zuleitung des zu konvertierenden Gutes (sehr schematisiert)

9 Zuleitung von Frischluft bzw. Sauerstoff oder eines anderen Prozeß- oder Inertgases (sehr schematisiert)

10 Rauchgasleitung, über die das Prozeßgas, so wie es die Konversionseinheit verläßt, in die Naßwäsche befördert wird

11 Zwischenleitung zur Beförderung des vorgewaschenen Rauchgases in die Nachwäsche II

12 Übergangsleitung zum Transport des nachgewaschenen Rauchgases (= Restgas) uber ein ggf. noch zwischengeschaltenes Filter (z.B. Elektrofilter) und das Gasometer 5 in die Kaminregion 6

13 Meßstelle und Austritt für das Reingas vor Verlassen des Kamins

14 Zufuhr für schwellenwirksamen Stoff (GS), analog 6, 20

15 Zufuhr von Additiv, z.B. einer Mischung aus Natriumaluminat und Wasserglas, analog 17 und 19

16 siehe 14

17 siehe 15

18 Wasservorrat zur Zubereitung und ggf. Ergänzung bzw. Auffüllung des Waschwassers in der Konditionierungseinheit (Ablauf-Eindicker 7)

19 siehe 15

20 siehe 14

21 Zufuhr von Flockungsmittel (FM) bzw. Flockungshilfsmittel

22 Zufuhr von Erdalkaliverbindungen wie z.B. $Ca(OH)_2$ in Form von Kalkwasser bzw. gelöschtem Kalk oder von Dolomitsuspensionen und dergl. (fakulativ)

23 Kohlendioxid-Zufuhr, die eine separate $CO_2$-Quelle oder auch eine Abzweigung aus dem Konversionsprozeß sein kann, da praktisch bei allen Konversionsprozessen, einschließlich der Stahlher stellung eine Verbrennung von kohlenstoffhaltigen Materialien stattfindet,

24 Förderleitung für Klarlaufwasser aus dem AblaufEindicker, das für die Naßwäsche entsprechend vorkonditioniert worden ist

25 Flüssigkeitspumpe für den Waschwasserkreislauf

26 Zwischenförderleitung zur Beförderung des Wassers aus dem Nachwäscher in den Vorwäscher, wobei die Flüssigkeitsverteilung am besten im oberen Teil der Wäscher und zweckmäßigerweise über Venturidüsen und dergl. erfolgen kann,

27 Rücklaufleitung für belastetes Waschwasser, das teilweise in Form von Schlammwasser vorliegt

28 Entlade-Linie für das konvertierte Material, wie z.B. Roheisen (Hochofen), Stahl (LD-Blasstahlverfahren), Schlacke (Müllverbrennung bzw. Hochofen), Gangart (Kohle), Rückstandsöle (Ölfeuerung) und dergl.. Nicht immer wird deshalb über 28 ein Wertstoff abtransportiert.
29 Shuntleitung zur möglichen Umgehung des Ablauf-Eindickers
30 Austrag des eingedickten Waschwasserschlamms
31 Entnahme von behandeltem Abgas mit brennwerthaltigen Anteilen
32 Umgehungsleitung zur direkten Zuführung zum Kamin (6)

Die erfindungsgemäß stattfindenden Grundprozesse der Materialkonversion sind allgemein bekannt und bedürfen deshalb hier keiner näheren Erläuterung. Wegen Einzelheiten wird deshalb auf einschlägige Literatur verwiesen, siehe z.B. L. Fiege, H. Schröer und W. Resch, Stahl und Eisen 103 (1983), Nr. 6, S. 265-270, "Erhöhung der Haltbarkeit der Feuerfestzustellung von LD-Konver tern durch Einsatz von Weichbranntdolomit und vorbeugendem Spritzsystem".

Das Additiv (ADD) wurde bereits ausführlich erlautert. Die Verwendung von sogenannten schwellenwirksamen Stoffen mit Kristallwachstumdesaktivator-Eigenschaften und meistens auch grenzflächenaktiven Eigenschaften bei Naßwaschprozessen, die hinter eine Konversionsanlage geschaltet sind, ist an sich bekannt, zur Definition siehe auch Held-Bohnsack, Kühlwasser, Vulkan-Verlag Essen 1984, Abschnitt Kühlwasserbehandlungsverfahren, S. 220 und 221. Diese Substanzen stören den regelmäßigen Aufbau von kristallinen Ablagerungen auf den Flächen und in den Leitungen zu und von dem Wäscher, sowie in den Einrichtungen wie Pumpen, Ventilen, Düsen und anderen Einrichtungen, mit denen eine Waschvorrichtung arbeitet. Im Zuge der Erfindung hat sich jedoch gezeigt, daß schwellenwirksame Substanzen und die Aluminatkomponente vorteilhaft zusammenwirken, denn die Ausfällung von überschüssigem Kalk und Dolomit (bei Einsatz von Kalkmilch in Verbindung mit $CO_2$ bzw. Natriumhydrogencarbonat) wird nach dem erfindungsgemäßen Verfahren synergisch verbessert, so daß das Kreislaufwasser wesentlich effizienter genutzt und umgeführt werden kann.

Aber auch bezüglich der Bindung von Metallgehalten aus dem Rauchgas ergibt sich eine verbesserte Wirkung. Solche Stäube sind entweder Feinstäube mit Staubteilchen einer Teilchengröße vorzugsweise unterhalb 6-7 mm, aerosolgebundene Staubteilchen oder auch im echten Gaszustand vorliegende fluchtige Schwermetallverbindungen. Geeignete schwellenwirksame Stoffe (GS) sind vor allem anionische grenzflächenaktive Stoffe und die Nonlonics. Besonders geeignet für die erfindungsgemäß angestrebte Zusammenwirkung mit den Aluminaten sind Phosphate, Phosphatsäureester, Phosphoncarbonsäuren und deren Abkömmlinge einschließlich Salze, in spezifischer Kombination mit Konditionierungsmitteln für Feststoffe (wie z.B. Lignosulfonaten) und Tensiden, die ihrerseits ein besonderes Absorptions- und/oder Adsorptionsvermögen für die sich bildenden Inkrustrationen bzw. Inkrustrationskomponenten aufweisen. Ebenfalls geeignet sind Polymerisate auf Acrylatbasis wie Acrylat-Copolymere mit niedrigem Molekulargewicht und Polymere auf Basis von Maleinsäure, Itaconsäure sowie die Phosphonocarbonsäuren, wie sie z.B. in der DE-PS 27 20 551 beschrieben werden. Die letztgenannten Verbindungen haben die allgemeine Formel

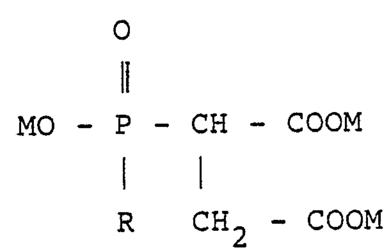

worin R für Wasserstoff oder 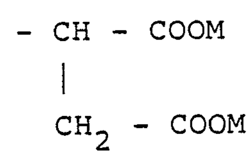

und M für Wasserstoff, Alkalimetall, Ammonium oder Amin steht.

Das erfindungsgemäße Verfahren hat den Vorteil, daß sowohl die prozeßkausale Wasserhärte, bedingt duch Kalk, Dolomit oder Erdalkalisulfat, als auch gleichzeitig die durch Metallgehalte verursachte Rauchgaskontaminierung wirksam herabgesetzt werden kann.

Während des Waschwasserklärungs- und Konditionierungsprozesses, der im Ablauf-Eindicker (7) stattfindet. wird ein Flockungsmittel, ggf. zusammen mit einem Flockungshilfsmittel zugesetzt. Als diese Flockungsmittel und Flockungshilfen haben sich hervorragend bewährt anionische Polyelektrolyte und insbesondere das Flockungshilfsmittel Nalco 625, ein anionischer Polyelektrolyt auf der Basis von Acrylsäure-Acrylat bzw. AcrylsäureMethacrylat, vorzugsweise mit einem Niederalkylacrylatbzw. Niederalkylmethacrylat-Anteil von etwa 5 bis 40 Gew.-% und mit einem verhältnismäßig niedrigen Molekulargewicht von etwa 5.000 bis 30.000 (Zahlenmittel).

Wegen Einzelheiten des Waschwasser-Konditionierungsprozesses und der hierzu besonders geeigneten Einrichtungen wird auf die noch nicht offengelegte dt. Patentanmeldung P 36 30 666.5 verwiesen, die hier als Referenzliteratur auch Gegenstand der vorliegenden Beschreibung wird. Eine Kopie dieser z.Z. noch nicht offengelegten Patentanmeldung wird deshalb als Anlage beigefügt.

Allgemein wird im Konversionsprozeß A ein mit diversen Schadstoffen wie CO, $CO_2$, $SO_2$, HCl, HF, Metalldämpfen wie Pb, Cd, Ni, Cr und dergl. und mit Staubteilchen (z.B. Kalk- und Dolomitteilchen) belastetes Rauchgas gebildet, das die Wäsche 2 und 3 durchläuft, ggf. in einer mechanisch bzw. elektromechanisch arbeitenden Filtereinheit noch von mitgerissenen Feststoffteilchen befreit und dann gereinigt an die Atmosphäre abgegeben oder als brauchbare Phase abgetrennt und weiterverarbeitet wird. In den Abgaswäschern 2 und 3 kommt das zu reinigende Rauchgas mit dem konditionierten Waschwasser und somit mit den gezielt zugesetzten Additiven (ADD, GS) in Kontakt, wobei es durch chemische Reaktionen und/oder durch physiko-chemische Vorgänge wie Adsorption und Absorption von dem größten Teil der mitgeführten Schadstoffe befreit wird. Die Auslegung der Wascheinheiten 2 und 3 erfolgt im Hinblick auf den konkreten Konversionsprozeß und die notwendige Intensivierung des Rauchgas-Waschwasser-Kontaktes. Ähnliches gilt für die Materialien zur Auskleidung der Reaktoren. "Waschwasser" im vorliegenden Sinne umfaßt nicht nur echte Lösungen, sondern auch Suspensionen, Emulsionen, Dispersionen, unechte kollidale Lösungen und komplexe Schlammlösungen; die Viskosität dieser Wässer sollte jedoch einem dünnflussigen Zustand entsprechen; anderenfalls die Handhabung größere Probleme aufgibt.

Die Temperaturführung des Waschwassers ist nicht unbedeutend, da das Rauchgas mit verhältnismäßig hoher Temperatur die Konvertereinheit verläßt, in der Naßwäsche nach Möglichkeit ein wäßriges flüssiges Medium angestrebt wird und das Reingas bei Durchtritt durch das Filter eine Mindesttemperatur haben sollte, um ein Zusetzen der Filterporen oder Filterplatten zu verhindern und um Kondensation zu vermeiden. Es ist möglich und aus energetischen Gründen auch zweckmäßig, neben dem direkten Wärmeaustausch zwischen Rauchgas und Waschwasser zusätzlich indirekte Wärmetauschereinrichtungen vorzusehen, beispielsweise vor Eintritt des heißen Rauchgases in die Wascheinheit bzw. das abgekühlte und gewaschene Rauchgas (Restgas) vor Eintritt in die Nachbehandlung wieder aufzuwärmen. Dies kann unter Nutzung der allgemein bekannten Mittel und Maßnahmen erfolgen. Typische Temperaturbereiche ergeben sich aus folgender Übersicht:

Tabelle I

| | | |
|---|---|---|
| LD-Konvertergas nach Abhitzekessel | | ca. 700 - 900°C |
| Waschwasser nach Verlassen des Wäschers | | ca. 40 - 100°C |
| " | bevorzugt | 80 - 90°C |
| Abgas-Temperatur (d.i. das gereinigte Abgas) | | 30°C |
| Temperatur d. zudosierten Waschwassers | | 10 - 40°C |
| " | bevorzugt | etwa 25°C |
| Temperatur d. Kreislauf-Waschwassers | | 25 - 75°C |
| " | bevorzugt | 30 - 60°C |

Falls die Wascheinheit so ausgelegt wird, daß das Waschwasser mehrmals im Kreislauf umgeführt wird, bevor es in dem Ablauf-Eindicker geklärt und erneut konditioniert wird, kann Leitung 27 z.B. mit Leitung 25 kurzgeschlossen werden, wie dies durch die Leitungsbrucke 29 (Shunt) angedeutet ist.

Das Verfahren der Erfindung behandelt Massenströme; deshalb wird es meistens in der Praxis mehr oder weniger bei Atmosphärendruck aufgeführt.

Ein Arbeiten bei Unter- oder Überatmosphärendruck, zumindest in Teilabschnitten der Gas- und Fluidführung ("Fluid" wird hier gleichbedeutend für eine der verschiedensten Formen des Waschwassers

benutzt) ist jedoch nicht ausgeschlossen.

Die Erfindung wird anhand eines Beispiels in Zusammenhang mit einem LD-Blasstahlverfahren näher erläutert. Die Vorteile werden augenscheinlich.

## Beispiel

In einem Blasstahlwerk (LD Verfahren) mit 3 Konvertern sowohl mit totaler als auch mit unterdrückter Verbrennung des Konvertergases wird die Gasreinigung mit einem zweistufigen Wäscher nach dem Venturi-Prinzip betrieben. Zur Bildung der Schlacke und zur Substitution des Magnesiumverlustes der Konverterbeschichtung wird sowohl Stückkalk als auch Stückdolomit mit Beginn des Blasens zugesetzt. Die große Gasentwicklung von ca. 150.000 $m^3/h$ im Konverter bewirkt beim Blasvorgang eine Windrichtung des zugesetzten Stückgutes. Das Unterkorn ( 7 mm) wird in erheblichem Anteil in das Waschsystem eingetragen. In der 1. Waschstufe (Sättiger oder Wäscher I) erfolgt teilweise die Umsetzung von Kalk und Dolomit mit Wasser und mit dem prozeßbedingten $CO_2$ zu Calciumcarbonat mit Eisenoxid-Einschlüssen, die sich zum Teil an den Wandungen des Waschsystems ablagern bzw. aufwachsen. In der zweiten Waschstufe (Wäscher II) findet eine Fortsetzung dieser Umsetzung statt. Dabei werden in dem Wäscher erhebliche Belagstärken von ca. 20 - 40 cm erreicht, die die ordnungsgemäße Funktion des Waschsystems behindern und ungewollte Stillstände und umfangreiche Reinigungsarbeiten verursachen.

Die Abläufe aus den beiden Waschstufen werden in einem Eindicker geklärt und das Waschwasser wird zurückgeführt. Dieses Waschwasser enthält in Abhängigkeit von der Stückigkeit des Kalkes oder Dolomites erhebliche Anteile an gelöstem Calciumhydroxid (5 bis 100% ige Sättigung). Dieses Waschwasser reagiert bei Kontakt in den Wäschern naturgemäß spontan mit dem $CO_2$ des Konvertergases, und zwar zusätzlich zu dem über die Wind sichtung eingetragene Kalkmenge. Zur Verhinderung der Ablagerung werden dem-waschwasser vor Eintritt in den Wäscher 1 bis 40 ppm einer Additivmischung (Phosphonat) zugegeben, um die Ausfällung von Calciumcarbonat zu verzögern bzw. eine günstigere Kristallmodifikation des entstehenden Calcits zu bewirken. Hierbei wird ein Synergismus der Produktkombination genutzt. Die verzögerte Fällung des Calciumcarbonats findet vorwiegend erst in den Kläreindickern (z.B. Ablauf-Eindicker 7) statt.

Gleichzeitig wird der noch überschüssige Kalk durch Zugabe von Kohlensäure ($CO_2$) in einer Menge von 0,1 bis 0,5 kg/t Stahl ebenfalls ausgefällt und durch Zugabe eines Flockunghilfsmittels in einer Menge von 0,1 bis 5 ppm sedimentiert. Dieser Vorgang wird durch die zugesetzten Phosphonate (Tenside) verzögert. Um im Eindicker eine vollständige Ausfällung zu erreichen, wird dem einlaufenden Wasser zusätzlich z.B. gelöstes wässriges Aluminat (1 bis 10 cpm) zugesetzt. Es ergaben sich folgende Werte:

1. Ablauf des Eindickers (Aufenthaltszeit im Eindicker ca. 4 h),

unbehandelt
pH 12,3
Calciumhärte 29,4° dh
m-Wert 10,5 mval/l (m-Methylorange, $SK_{4,2}$)
p- Wert 10,0 mval/l (p-Phenolphthalin, $Sk_{8,2}$)

2. behandelt, aber ohne Aluminat

pH 10,0
Calciumhärte 18,5 ° dh
m-Wert 6,6 mval/l
p-Wert 5,8 mval/l

3. mit Aluminat behandelt

pH 10.0
Calciumhärte 8,8 °dh
m-Wert 3,1 mval/l
p-Wert 1,0 mval/l

Entsprechend der Vorbelastung des Waschwassers verringerte sich auch der Calciumgehalt im Ablauf der einzelnen Waschstufen und entsprechend auch die Belagbildung.

Das Beispiel ist mit einer Anlage gemäß Figur 1 realisierbar.

**Ansprüche**

1. Verfahren zur Kontrolle und Steuerung der prozeßbedingten Wasserhärte von Kreislaufwasser in Konversionsanlagen, insbesondere in Anlagen zur Eisen-, Stahl- und NE-Metallgewinnung, -raffination und/oder- verarbeitung, bei welchen schadstoffbelastete Abgase gebildet werden, die gemäß den Richtlinien zur Reinhaltung von Luft ohne entsprechende Abreinigung nicht an die Atmosphäre abgegeben werden können, mit mindestens einer nachgeschalteten Naßwäsche, dadurch gekennzeichnet, daß dem Waschwasser und/oder dem im Kreislauf geführten Klärwasser neben üblichen Zusätzen wie Kohlensäure, Flockungsmitteln, schwellenwirksamen Stoffen mit Kristallwachstumdesaktivator-Eigenschaften (GS) und Erdalkaliverbindungen wie Kalkwasser zusatzlich mindestens eine Aluminatverbindung zugesetzt wird, um die Abreinigungswirkung zu verstärken.

2. Verfahren nach Anspruch 1, dadurch gekennzeichnet, daß als Aluminatkomponente ein in wäßrigen Medien lösliches Natriumaluminat eingesetzt wird.

3. Verfahren nach Anspruch 1, dadurch gekennzeichnet, daß als Aluminatkomponente eine kolloidal dispergierbare Verbindung eingesetzt wird.

4. Verfahren nach Anspruch 1, dadurch gekennzeichnet, daß als Aluminatkomponente eine in wäßrigen Medien dispergierbare bzw. suspendierbare Verbindung eingesetzt wird.

5. Verfahren nach einem der Ansprüche 1 bis 4, dadurch gekennzeichnet, daß die Naßwäsche Calcium- und/oder Magnesiumverbindungen als Zusätze zur Abgasabreinigung verwendet.

6. Verfahren nach einem der Ansprüche 1 bis 5, dadurch gekennzeichnet, daß die Belastung des Abgases mit aus dem Konversionsprozeß herrührenden Metallstäuben, Metallverbindungsstäuben, Staubaerolosen, insbesondere solchen Bestandteilen aus Schwermetallen bzw. Schwermetallverbindungen, durch den Zusatz der Aluminatkomponente über den durch übliche Naßwäsche ohne diesen Aluminatzusatz erreichbaren Grad hinausgehend noch weiter abgereinigt wird.

7. Verfahren nach einem der Ansprüche 1 bis 6, dadurch gekennzeichnet, daß ein Abgas mit Feinstaubbelastung abgereinigt wird, das freie, gebundene oder aerosolgebundene Staubteilchen, vorzugsweise einer mittleren (freien) Teilchengröße kleiner als etwa 6-7 mm aufweist, die durch die Naßwäsche unter Mitwirkung der Aluminatkomponente aus dem Abgas weitgehend abgetrennt werden.

8. Verfahren nach einem der Ansprüche 1 bis 7, dadurch gekennzeichnet, daß als Aluminatkomponente eine solche Verbindung eingesetzt wird, die im wäßrigen System unter den Prozeßbedingungen der Abgaswäsche $OH^-$ -Ionen bildet und durch pH-Verschiebung die Keimbildungsreaktionen beschleunigt.

9. Verfahren nach einem der Ansprüche 1 bis 8, dadurch gekennzeichnet, daß die Aluminatkomponente mit einer zugesetzten $SiO_2$-Komponente zusammenwirkt, die ausgewählt ist aus der Gruppe der Alkalisilikate, Kiesel säuren, Kieselsäuregele und Kieselsäuresole und die gemeinsam und/oder getrennt dem Wasch- oder Kreislaufwasser zugeführt wird.

10. Verfahren nach Anspruch 9, dadurch gekennzeichnet, daß mindestens eine dieser zusätzlich zugeführten Natriumsilikatverbindungen Wasserglas ist.

11. Verfahren nach einem der Ansprüche 1 bis 9, dadurch gekennzeichnet, daß diese Natriumsilikatverbindung ein Zeolith ist.

12. Verfahren nach einem der Ansprüche 1 bis 11, dadurch gekennzeichnet, daß die Aluminatkomponente in einer solchen Menge eingesetzt wird, daß im Abgaswäscher eine mittlere Konzentration von Natrium/Aluminium im Bereich von etwa 0,20 bis etwa 0,36 g/l eingestellt, ausgedrückt in g Natriumionen/g Aluminat.

13. Verfahren nach einem der Ansprüche 1 bis 12, dadurch gekennzeichnet, daß der Aluminatzusatz einschließlich Silikatzusatz so bemessen wird, daß sich im Abgaswäscher ein Verhältnis von Al:Si im Bereich von etwa 1:5 bis 1:20 einstellt.

14. Verfahren nach einem der Ansprüche 1 bis 13, dadurch gekennzeichnet, daß Schwermetallgehalte des Konversionsprozesses während des Waschvorgangs gebunden werden, die mit dem Abgas, ggf. unter Mitwirkung von Wasserdampf aus der Konversionszone abgetrieben werden.

15. Verfahren nach einem der Anspruche 1 bis 14, dadurch gekennzeichnet, daß während der Naßwäsche im Konversionsprozeß gebildete Aluminiumverbindungen eben falls gebunden werden, so daß sich das Na/Al-Verhältnis im Additiv nach erfolgter Naßwäsche auf einen niedrigeren Wert als 1:1 bis 1:2 einstellt.

16. Verfahren nach einem der Ansprüche 1 bis 15, dadurch gekennzeichnet, daß die Naßwäsche mit Zusatz von Calcium- und/oder Magnesiumsalzen arbeitet und die Nukleusbildung durch den Zusatz einer Alkalialuminiumverbindung und unter Fällung von Erdalkalicarbonaten beschleunigt wird.

17. Verfahren nach einem der Ansprüche 1 bis 16, dadurch gekennzeichnet, daß die Nukleusbildung von ausfällbaren Erdalkalimetallverbindungen unter Mitwirkung von Schwefeldioxiden bzw. Sulfaten beschleunigt wird.

18. Verfahren nach einem der Ansprüche 1 bis 17, dadurch gekenzeichnet, daß dem Wasserkreislaufsystem als $CO_2$-Quelle Natriumcarbonat oder Natriumhydrogencarbonat zugesetzt wird.

19. Verfahren nach einem der Ansprüche 1 bis 15 und 18, dadurch gekennzeichnet, daß die Nukleusbildung vorwiegend zur Fällung von Calciumsulfit oder Calciumsulfat führt.

20. Verfahren nach einem der Ansprüche 1 bis 19, dadurch gekennzeichnet, daß einer Konvertereinheit mit bis zu 3 Einzelkonvertern mindestens zwei Naßwaschstufen nachgeschaltet sind und der Zusatz der Aluminatkomponente vor Eintritt in den ersten, ggf. zusätzlich vor Eintritt in den zweiten Wäscher und vorzugsweise auch zum Ablaufeindicker erfolgt, in welchem das aus der Naßwäsche resultierende kontaminierte Kreislaufwasser unter Mithilfe von Flockungsmitteln eingedickt und von einem Teil der darin enthaltenen Feststoffteilchen abgetrennt wird.

21. Verfahren nach einem der Ansprüche 1 bis 20, dadurch gekennzeichnet, daß im Naßwäscher ein Härtestabilisator wie z.B. ein Phosphonat oder ein Acrylatcopolymerisat, bevorzugt mit niedrigem Molekulargewicht zugesetzt wird, wobei die Härtestabilisatorwirkung in der Kläreinheit in Gegenwart der Aluminatkomponente wie Natriumaluminat weitgehend aufgehoben wird.

22. Verfahren nach einem der Ansprüche 1 bis 21, dadurch gekennzeichnet, daß in der Ablaufeindicker-Einheit gleichzeitig die Konditionierung des in den Kreislauf einzuspeisenden Waschwassers unter Zusatz von $CO_2$, von Erdalkaliverbindungen, und von grenzflächenaktiven Stoffen erfolgt.

23. Verfahren nach einem der Ansprüche 1 bis 22, dadurch gekennzeichnet, daß dem Kreislaufwasser zusätzlich Verbindungen zugesetzt werden, die ein schadstoffspezifisches Bindevermögen aufweisen, z.B. durch Chelatisierung, Fallung, Hydrolyse oder andere an sich bekannte chemische Reaktionen mit aus dem Konversionsprozeß ausgetragenen spezifischen Schadstoffen des Abgases.

24. Verfahren nach einem der Ansprüche 1 bis 23, dadurch gekennzeichnet, daß die Zudosierung der Aluminatkomponente, ggf. mit weiteren Absorptionsverbindungen über die Dosierstellen gesteuert wird, in Abhängigkeit von den Konversionsprozeßparametern und von der Konzen tration der Schadstoffe.

25. Verfahren nach einem der Ansprüche 1 bis 24, dadurch gekennzeichnet, daß die Prozeßsteuerung zur richtigen Zudosierung der Aluminatkomponente, ggf. auch der Natriumsilikatverbindung und ggf. weiterer Absorptionssubstanzen, über Meßsonden zur Messung des Schadstoffgehaltes von Abgaskomponenten in den Abgasen gesteuert wird.

26. Verfahren nach einem der Ansprüche 1 bis 25, dadurch gekennzeichnet, daß der Konversionsprozeß ein LD-Blasstahlverfahren ist.

27. Verfahren nach einem der Ansprüche 1 bis 26, dadurch gekennzeichnet, daß der Konversionsprozeß ein Verbrennungsprozeß, z.B. ein Prozeß zur Energiegewinnung, Abfallbeseitigung durch Verbrennung und dergl. ist.

28. Verfahren nach einem der Ansprüche 1 bis 27, dadurch gekennzeichnet, daß die verbrennbare $CO/CO_2$-Phase aus der Konvertereinheit in geeigneten Vorrichtungen verbrannt und mindestens ein Teil des Verbrennungsgases dazu genutzt wird, im Wäscher bzw. innerhalb des Waschkreislaufes Calciumcarbonat zu fällen.

29. Additiv zur Beschleunigung der Abreinigung von Abgasen, nach einem der Ansprüche 1 bis 28, gekennzeichnet durch ein wäßriges Fluid mit Flockungsmitteln, grenzflächenaktiven Mitteln, Erdalkaliverbindungen und mindestens einer gelösten und/oder dispergierten bzw. suspendierten Aluminatkomponente in einer Konzentration von etwa 0,01 bis 10 g Aluminium/l Fluid und vorzugsweise von etwa 0,1 bis 5 g Al/l Fluid.

30. Additiv nach Anspruch 29, dadurch gekennzeichnet, daß es zusätzlich mindestens eine Natriumsilikatverbindung enthält, vorzugsweise in einer solchen Konzentration, daß sich ein Al:Si-Verhältnis von etwa 1:1 bis 1:5 einstellt.

31. Additiv nach einem der Ansprüche 29 und 30, dadurch gekennzeichnet, daß zusätzlich eine Aktivstoffkomponente enthalten ist, die spezielle anorganische Schadstoffkomponenten im Abgas, wie flüchtige Schwermetallverbindungen, unter den Prozeßbedingungen des Abgaswäschers chemisch, absorptiv und/oder adsorptiv bindet.

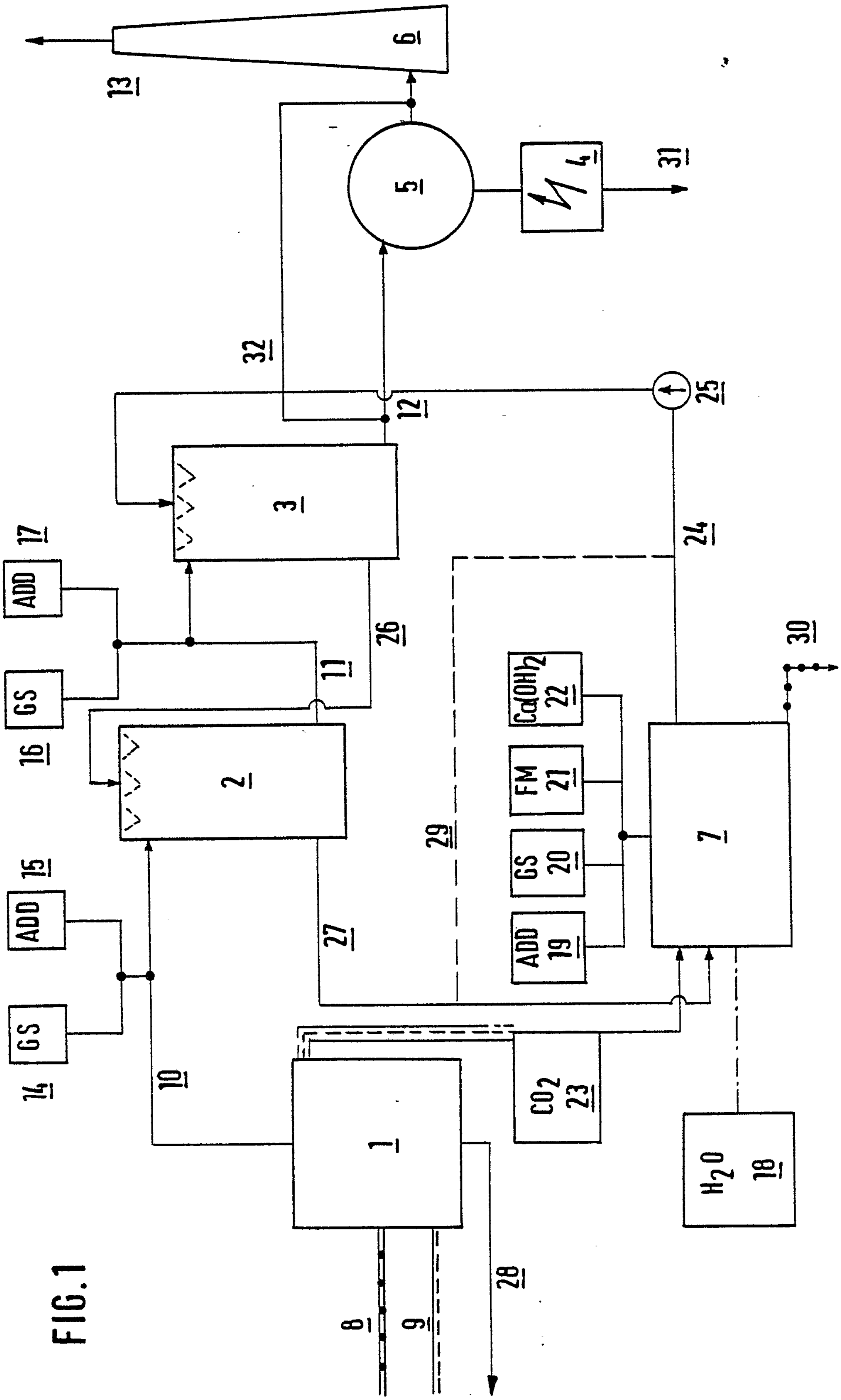
1
2
3
4
5
6
7
8
9
10
11
12
13
14
15
16
17
18
19
20
21
22
23
24
25
26
27
28
29
30
31
32
GS
ADD
GS
ADD
ADD
GS
FM
Ca(OH)2
CO2
H2O

FIG.1